# EUROPÄISCHE PATENTANMELDUNG

(11) **EP 1 308 832 A2**
(43) Veröffentlichungstag der Anmeldung: **07.05.2003**
(21) Anmeldenummer: 02020079.6
(22) Anmeldetag: 06.09.2002
(51) Int. Cl.: G06F 3/033

(54) **Elektronisches Gerät**

(30) Priorität: 31.10.2001 DE 10153614
(71) Anmelder: Fujitsu Siemens Computers GmbH, 81739 München (DE)
(72) Erfinder: Gerstner, Robert, 86163 Augsburg (DE)
(74) Vertreter: Epping Hermann & Fischer

(57) **Zusammenfassung**

Die Erfindung betrifft ein elektronisches Gerät mit einer grafischen Oberfläche, wie zum Beispiel einem Display, auf welchem Bildinhalte von Programmen in Fenstern dargestellt sind. Sind die Bildinhalte für das Fenster des Anwendungsprogrammes zu groß, so sind seitlich der Fenster Scrollbars angeordnet.

Erfindungsgemäß kann das Gerät in einen Modus geschaltet werden, in welchem alle Bildinhalte in den Fenstern, die verschiebbar sind, mit einem Zeigeinstrument ergriffen und bewegt werden können.

## Beschreibung

Die Erfindung betrifft ein elektronisches Gerät mit einer grafischen Oberfläche, auf welcher die dargestellten Bildinhalte bewegbar sind.

Speziell bei portablen elektronischen Geräten, wie Notebooks, Organizer und Handys, stellt sich das Problem, das Gerät so klein wie möglich zu gestalten, jedoch gleichzeitig so viel wie möglich Informationen visualisieren zu können. Die Abmaße dieser Geräte sind vorgegeben und die Größe des Displays und seine Auflösung leiten sich daraus ab. Die Folge ist, daß manche Inhalte wie z. B. Internetseiten oft nicht ganz darstellbar sind. Bei Betriebssystemen mit grafischer Oberfläche wird in diesem Fall durch die sogenannten Scrollbars am Rande des Applikationsfensters angezeigt, daß nur ein Teil des gesamten Inhaltes im Fenster dargestellt wird. Gleichzeitig dienen die Scrollbars dem Anwender dazu, den sichtbaren Ausschnitt zu wählen.

Dieser Nachteil tritt insbesondere bei kleinen Geräten wie Notebooks, Handhelds, Organizer oder sogenannte smart phones auf.

Ein weiterer Nachteil der Scrollbars ist, daß ein Verschieben immer nur in eine Richtung, d. h. horizontal oder vertikal durchgeführt werden kann und man sich somit durch abwechselndes horizontales und vertikales Verschieben zum gewünschten Bildschirmausschnitt vortastet.

Bei einigen Programmen ist es auch möglich durch die Richtungstasten, d. h. die Cursor oder die Page up- und Page down-Tasten die Scrollbars zu bedienen. Jedoch hängt das genaue Verhalten von der jeweiligen Applikation ab, so daß die Bewegung der Scrollbars über die Richtungstasten nur bei denjenigen Applikationen, die dies vorsehen, durchgeführt werden kann.

Auch die Schrittweite, mit welcher die Scrollbars weiterbewegt werden, ist voreingestellt. Man kann nicht zwischen einer genauen aber langsamen oder eine groben schnellen Verschiebung des sichtbaren Bereiches wählen. Außerdem sind auch dem diagonalen Verschieben Grenzen gesetzt. Wenn das diagonale Verschieben möglich ist, so kann zumindest die genaue Richtung nicht vom Anwender bestimmt werden.

Aus dem Stand der Technik sind auch Softwareerweiterungen einiger Maus-Hersteller bekannt, welche Funktionen wie Autobildlauf oder Autoscrolling bieten. Durch diese Software ist es möglich, mit der Maus eine Richtung anzugeben, in welcher der Bildinhalt automatisch verschoben werden soll. Durch einen Mausklick wird der zu verschiebende Fensterinhalt selektiert. Dieser Punkt dient als Bezugspunkt für die Autobildlauffunktion. Durch die Entfernung der Maus von diesem Bezugspunkt, wird die Richtung und Geschwindigkeit festgelegt, mit welcher der Fensterinhalt verschoben werden soll.

Diese Funktion hat den Nachteil, daß man leicht über sein Ziel hinausschießt. Beim anschließenden Versuch gegen zu steuern, verliert man meist die Orientierung.

Eine weitere Lösung des Problems, daß nicht der gesamte Bildinhalt in einem Fenster dargestellt werden kann ist, daß der Inhalt lediglich verkleinert wird. Dies hat jedoch den Nachteil, daß Details verloren gehen und man zum Beispiel Text oder Grafiken nur noch schwer erkennen kann.

Eine alternative Möglichkeit, den Inhalt eines Fensters zu verschieben, zeigt zum Beispiel der Acrobat-Reader 4.0.

Alternativ zu den Scrollbars kann auch ein Punkt über eine Maustaste fixiert werden und durch Verschieben der Maus der gesamte Bildinhalt bewegt werden. Die Maustaste muß dabei gedrückt gehalten werden.

Diese Art und Weise des Verschiebens eines Bildinhaltes würde auch bei kleinen elektronischen Geräten wie Notebooks, Organizer oder Handhelds gut funktionieren.

Ebenso wie alle oben dargestellten Varianten den Bildinhalt eines Fensters zu verschieben sind diese Funktionen jedoch stets in den Applikationsprogrammen festgelegt.

Der Erfindung liegt daher die Aufgabe zugrunde, das gattungsgemäße elektronische Gerät derart weiter zu entwickeln, daß auch bei Applikationen, welche keine Bewegung des Bildinhaltes durch Fixieren und Verschieben mit gedrückter Maustaste erlauben, eine einfache Bewegung des Bildinhaltes möglich ist.

Erfindungsgemäß wird diese Aufgabe dadurch gelöst, daß das Gerät in einen Modus umgeschaltbar ist, in dem alle auf dem Gerät darstellbaren und verschiebbaren Bildinhalte in beliebige Richtungen mit einem Zeigeinstrument bewegbar sind.

Das elektronische Gerät ist somit in einen Modus umschaltbar, in welchem unabhängig von der Applikation sämtliche Bildinhalte durch eine Maus, einen Trackball oder einen Stift verschoben werden können.

Gemäß einer bevorzugten Ausführungsform wird die Verschiebbarkeit des Bildinhaltes mittels eines Zeigegerätes durch eine Zusatz-Software erzielt.

Der Einsatz einer Zusatz-Software hat den Vorteil, daß diese auf jedem beliebigen PC, Handheld, Notebook und so weiter aufspielbar ist und somit auch für alle Applikationsprogramme wie Windowsprogramme angewendet werden kann.

Vorteilhafterweise ist die Zusatz-Software so gewählt, daß die Anwenderprogramme auf dem elektronischen Gerät nicht verändert werden.

Das Umschalten kann mittels eines Soft- oder Hardwareknopfes erfolgen. Das Umschalten ist insofern wichtig, da in einigen Programmen wie zum Beispiel Word zum Markieren eines Textteiles ebenso mit der Maus wie beim Verschieben des Bildinhaltes verfahren wird. Im Modus, in welchem das Bild verschoben werden kann, würde sich immer das Bild verschieben, wenn man eine Textstelle markieren möchte. Zu diesem Zweck wird lediglich über den Soft- oder Hardwareknopf wieder in den ursprünglichen Betriebsmodus zurückgeschalten.

Nachfolgend wird die Erfindung anhand eines in den Zeichnungen dargestellten Ausführungsbeispieles näher beschrieben.

In den Zeichnungen zeigen:
- Figur 1: ein Fenster mit seitlich angeordneten Scrollbars und
- Figur 2: die Bewegung des Bildinhaltes im Fenster mittels einer Maus.

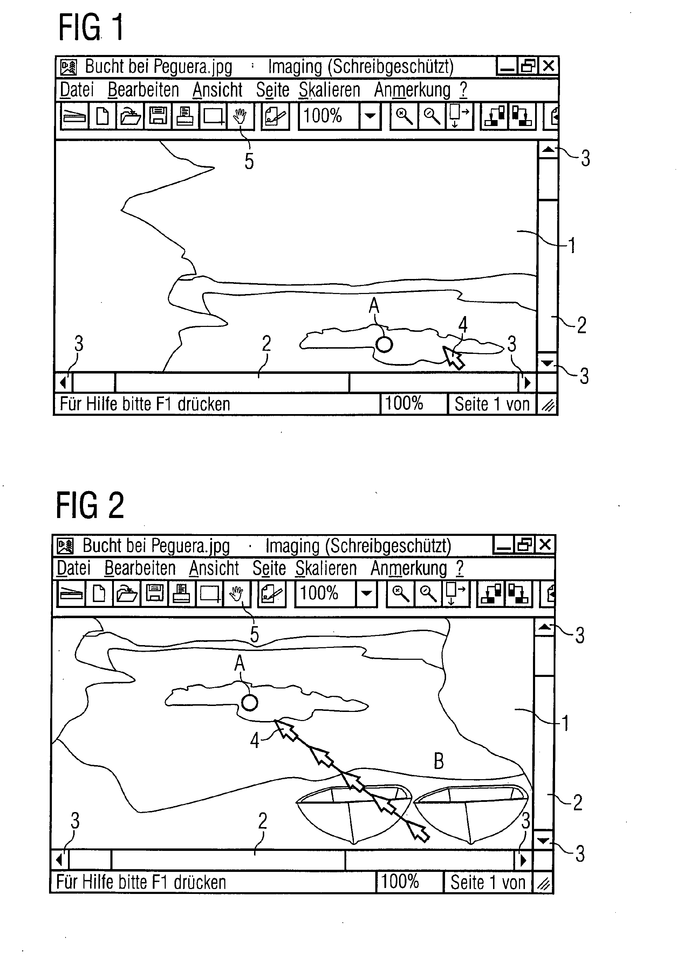

Figur 1 zeigt ein Fenster einer Windows-Applikation mit seitlich angeordneten Scrollbars 2. Der Bildinhalt 3 kann durch die Scrollbars 2 bewegt werden, indem auf diese mit der Maus geklickt, die Maustaste festgehalten und über die Maus der Scrollball nach unten beziehungsweise oben verschoben wird.

Ebenso kann ein Bewegen des Scrollbars durch Bewegen des Mauszeigers auf die Pfeiltasten 3 und Klicken mit der Maustaste erfolgen.

Möchte man nun den Bildinhalt nicht über die Scrollbars 2 bewegen, sondern direkt mittels eines Mauszeigers 4, so muß über einen Softwarebutton 5, welcher in der Menüleiste integriert ist, in den Modus umgeschaltet werden, in welchem alle Bildinhalte im Fenster durch ein Zeigeinstrument bewegt werden können.

Wie in Figur 1 dargestellt klickt man nun mit dem Mauszeiger 4 auf das Objekt A im Bild und verschiebt das Objekt A wie in Figur 2 dargestellt, bis z.B. das gewünschte Objekt B im Bild auftaucht.

Das Verschieben erfolgt durch Bewegung der Maus, wobei die Mauszeigertaste während des Verschiebens gedrückt gehalten werden muß.

Diese Funktion kann zu obigem Ausführungsbeispiel durch eine Zusatz-Software erzielt werden, so daß der Inhalt eines beliebigen mit Scrollbars versehenen Fensters einfach mit Hilfe eines Zeigeinstrumentes, wie einer Maus, einem Eingabestift oder einem Trackball verschoben werden kann.

Die Zusatz-Software hat den Vorteil, daß alle Applikationen diese Funktionen der Zusatz-Software nutzen können, ohne daß die Applikationen verändert werden müssen.

Die Zusatz-Software wird entweder aktiviert durch einen Software-Button 5 wie in Figur 1 dargestellt oder zum Beispiel durch einen Hardware-Knopf. Die Hardware-Umschaltung könnte zum Beispiel durch Drücken der Alt-Taste auf einer PC-Tastatur und dem weiteren Drücken eines speziellen Knopfes an dem Gerät erfolgen.

Durch Drücken der Maustaste oder bei einem Touchscreen durch Aufsetzen des Stiftes kann man in der Betriebsart, welche die Zusatz-Software ermöglicht, den Fensterinhalt sozusagen ergreifen und an eine beliebige Stelle verschieben. Bewegt man das Zeigeinstrument, verfolgt die Software die Bewegungen und paßt gleichzeitig die Scrollbars des Fensters derart an, daß der Fensterinhalt dem Zeigeinstrument folgt. Das Zeigeinstrument zeigt somit immer auf die gleiche Stelle des Fensterinhaltes und der Fensterinhalt folgt der Bewegung des Zeigeinstrumentes.

Ein weiteres Ausführungsbeispiel ist die Bedienung des Internet-Explorers auf einem Pocket-PC.

Da der Inhalt der meisten Webpages für eine Auflösung von 800 x 600 oder gar 1024 x 768 Pixel optimiert ist, kann bei der Darstellung auf einem Pocket-PC (Auflösung 240 x 320) meist nur ein Ausschnitt dargestellt werden. Um den nicht dargestellten Bereich zur Anzeige zu bringen, bedient man sich der üblichen Scrollbars am Randes des Applikationsfensters oder der Richtungstasten. Wesentlich einfacher und intuitiver läßt sich der Bildausschnitt durch die hier beschriebene Funktion bestimmen. Die Funktion zum Verschieben des Fensterinhaltes mittels eines Zeigeinstrumentes kann zum Beispiel durch einen Taster aktiviert werden. Beim Aufsetzen des Zeigeinstrumentes oder Stiftes auf den Touchscreen, wird dem elektronischen Gerät über eine Zusatz-Software der Punkt, an dem der Stift auf den Touchscreen aufsetzt, als Fixpunkt im Fensterinhalt ermittelt. Beim Bewegen des Stiftes verändert die Software nun die Scrollbars des Internet-Explorers so, daß die Stiftspitze immer auf diesen Fixpunkt, also immer auf die gleiche Stelle des Fensterinhaltes deutet. Auch hierbei ist keine Änderung am Anwendungsprogramm (Internet-Explorer) nötig. Die Zusatz-Software übernimmt die Steuerung der Scrollbars und ermöglicht hierdurch diese Komfortfunktion. Patentansprüche

## Patentansprüche

1. Elektronisches Gerät mit einer grafischen Oberfläche, auf welcher die dargestellten Bildinhalte bewegbar sind,
**dadurch gekennzeichnet,daß**
das Gerät in einen Modus umgeschaltbar ist, in dem alle auf dem Gerät darstellbaren und verschiebbaren Bildinhalte in beliebige Richtungen mit einem Zeigeinstrument bewegbar sind.

2. Elektronisches Gerät nach Anspruch 1,
**dadurch gekennzeichnet,daß**
das Bewegen des Bildinhaltes durch Fixierung eines Bildpunktes mit dem Zeigegerät und durch Bewegung des Zeigegerätes erfolgt.

3. Elektronisches Gerät nach Anspruch 1 oder 2,
**dadurch gekennzeichnet,daß**
die Verschiebbarkeit der Bildinhalte mittels eines Zeigeinstruments und einer Zusatz-Software erzielt wird.

4. Elektronisches Gerät nach Anspruch 3,
**dadurch gekennzeichnet,daß**
die Zusatz-Software keine anpassung der Anwender-Programme auf dem elektronischen Gerät erfordert.

5. Elektronisches Gerät nach Anspruch 1,
**dadurch gekennzeichnet,daß**
das Umschalten mittels eines Software- und/oder Hardwareknopfes erfolgt.
